# EUROPÄISCHE PATENTSCHRIFT

(11) **EP 0 916 978 B1**
(45) Veröffentlichungstag und Bekanntmachung des Hinweises auf die Patenterteilung: **22.04.2009**
(21) Anmeldenummer: 97810865.2
(22) Anmeldetag: 13.11.1997
(51) Int. Cl.: G02B 6/38

(54) **Steckeranordnung für eine optische Einschub-Steckverbindung**
Connecting device for optical drawer connexion
Dispositif connecteur pour une connexion optique à tiroir

(43) Veröffentlichungstag der Anmeldung: 19.05.1999
(73) Patentinhaber: Diamond SA, 6616 Losone (CH)
(72) Erfinder: De Marchi, Silverio, 6612 Ascona (CH)
(74) Vertreter: Wenger, René

(56) Entgegenhaltungen:
- EP-A- 0 768 547
- EP-A- 0 805 366
- WO-A-94/24594
- DE-U- 29 512 773

## Beschreibung

Die Erfindung betrifft eine Steckeranordnung für eine optische Einschub-Steckverbindung gemäss dem Oberbegriff von Anspruch 1. Derartige Steckeranordnungen dienen dazu, beispielsweise eine mit mehreren optischen Steckern bestückte Platine derart im Gehäuse eines Geräts zu befestigen, dass die Stecker in korrespondierende Buchsen eingesteckt sind, welche an einer quer verlaufenden Gerätewand befestigt sind.

Im Gegensatz zu elektrischen Einschub-Steckverbindungen muss bei einer Lichtwellenleiter-Steckverbindung stets ein axialer Anpressdruck auf die Steckerstifte aufrecht erhalten werden, um eine optimale Lichtübertragung mit einer möglichst geringen Dämpfung zu gewährleisten. Diese axiale Federkraft wird bei konventionellen Einschub-Steckverbindungen auch auf die Tochterplatine übertragen, womit diese stets unter mechanischer Spannung steht. Ausserdem ist eine Kompensation von Masstoleranzen praktisch nicht möglich.

Durch die WO 94/24594 ist eine optische Einschub-Steckverbindung für sogenannte Push-Pull-Stecker bekannt geworden, bei welcher die Tochterplatine nach Erreichen der Einrastposition vom Steckerstift, bzw. von der Mutterplatine mechanisch entkoppelbar ist. Zu diesem Zweck werden durch Rippen am Buchsengehäuse federnde Stützfinger am inneren Steckergehäuse eingedrückt, so dass das mit der Tochterplatine verbundene äussere Steckergehäuse bei stillstehendem Steckerstift ohne Federvorspannung noch weiter gegen das Buchsenteil hin bewegt werden kann. Diese Lösung ist jedoch relativ aufwendig, weil keine standardisierten Buchsenteile eingesetzt werden können und weil auch das Steckerteil selbst erheblich modifiziert werden muss.

Die EP 805 366 zeigt eine Steckverbindung, bei welcher eine an einer ersten Leiterplatte angeordnete erste Steckerverbindungshälfte für Lichtwellenleiter ein in einem Tragkörper gehaltenes und verrastetes Steckerteil aufweist. Eine zweite Steckerverbindungshälfte ist im Randbereich einer zweiten Leiterplatte angeordnet. Beim Zusammenfügen der Steckerverbindungshälften wird diese Verrastung gelöst und es erfolgt eine Verrastung mit der ersten Steckerverbindungshälfte, wobei durch die gelöste Verrastung mit dem Tragkörper das Steckerteil darin verschiebbar gehalten ist. Die Zentrierung der beiden Steckerenden erfolgt nicht in einem separaten Buchsenteil, sondern in einer rohrförmigen Öffnung des zweiten Steckerteils.

Es ist daher eine Aufgabe der Erfindung, eine Steckeranordnung der eingangs genannten Art zu schaffen, mit deren Hilfe eine Einschub-Steckverbindung mit mechanisch entkoppelter Tochterplatine hergestellt werden kann, ohne dass das Buchsenteil modifiziert werden muss. Ausserdem sollen dabei standardisierte Steckerinnenteile verwendet werden können, wie sie auch für konventionelle Steckverbindungen eingesetzt werden. Diese Aufgabe wird erfindungsgemäss mit einer Stekkeranordnung gelöst, welche die Merkmale im Anspruch 1 aufweist.

Die direkte oder indirekte Abstützung des Steckergehäuses an einem federnden Schubelement hat den Vorteil, dass alle für die Entkoppelung der Tochterplatine erforderlichen Mittel an der Steckeranordnung selbst vorgesehen sind. Die Federkraft lässt sich dabei exakt so einstellen, dass diese beim Einschieben der Tochterplatine grösser ist, als die Reibungskräfte bis zum Erreichen der Einrastposition, die Abstützung also aufrecht erhalten bleibt. Erst beim Ansteigen der Schubkraft bei fortgesetzter Schubbewegung wird die Federvorspannung am Schubelement überwunden und die Abstützung damit selbständig gelöst.

Das Schubelement ist eine U-förmige Gabel, deren Schenkel aufspreizbar und/oder zusammenpressbar sind, wobei an den Schenkeln Schubnocken angeordnet sind, welche mit einem Schubanschlag zusammenwirken. Mit der U-förmigen Gabel lässt sich die für den Schub erforderliche Federkraft auf zwei Gabelschenkel verteilen.

Die Gabel ist der Tochterplatine zugeordnet, wobei die Schubnocken auf der Innenseite der in Einsteckrichtung gerichteten Gabelschenkel angeordnet sind. Dabei können weitere Vorteile erreicht werden, wenn zwischen dem Kabelansatz und den Schubnocken an jedem Gabelschenkel je ein Sperrklinkenzahn angeordnet ist, der zum Rückzug der Tochterplatine mit einem Zuganschlag zusammenwirkt. Die U-förmige Gabel erfüllt damit die Funktion eines Schub- und Zugelements, wobei die Sperrklinkenzähne die maximale Relativbewegung des Steckerteils auf der Tochterplatine begrenzen. Da die Gabelschenkel auseinander spreizbar sind, lässt sich der Zuganschlag leicht hinter die Sperrklinkenzähne einrasten.

Die Gabel ist am Gabelansatz in einem Einschubgehäuse gehalten, das wenigstens einen Führungsschacht für das Steckerteil bildet. Alternativ könnte aber auch die Tochterplatine selbst so ausgebildet sein, dass das Steckerteil direkt auf der Platine axial geführt ist. In einem derartigen Fall könnte die Gabel auch direkt auf der Tochterplatine montiert sein.

Weitere Vorteile können erzielt werden, wenn das Steckerteil auf einem Schlitten axial verschiebbar im Führungsschacht gelagert ist und wenn der Schubanschlag am Schlitten angeordnet ist. Der Schlitten gewährleistet einerseits eine einwandfreie Führung im Einschubgehäuse. Andererseits ermöglicht er aber auch die Verwendung konventioneller Steckerteile, so dass am Steckergehäuse selbst keine der Führung dienenden Teile vorgesehen sein müssen. Das Steckerteil kann dabei lösbar mit dem Schlitten verbunden sein.

Das Steckergehäuse kann einen Abschnitt aufweisen, der formschlüssig in eine Lagerpfanne am Schlitten passt, wobei der Schlitten Halteklauen aufweisen kann, die das Steckergehäuse in der Lagerpfanne fixieren.

Das Rastmittel zum Fixieren des Steckergehäuses im Buchsenteil kann eine am Steckergehäuse angeordnete Sperrleiste sein, welche in der Einrastposition mit einer federnden Sperrklinke am Buchsenteil zusammenwirkt. Dabei kann am Steckergehäuse ein Entriegelungshebel schwenkbar gelagert sein, mit dem die Sperrklinke lösbar ist, wobei der Entriegelungshebel eine Führungskulisse aufweist, welche derart mit dem Einschubgehäuse zusammenwirkt, dass bei ganz ausgefahrenem Steckerteil der Entriegelungshebel in Lösestellung gepresst wird. Optische Stecker, welche durch Einschieben in das Buchsenteil einrasten und durch Betätigen eines Entriegelungshebels wieder gelöst werden können, sind bereits bekannt. Durch das Zusammenwirken des Entriegelungshebels mit dem Einschubgehäuse erhalten derartige Stecker eine reine Push-Pull-Funktion, wobei der Stecker ausschliesslich durch eine Zugbewegung aus der Einrastposition gelöst werden kann.

Der Führungsschacht am Einschubgehäuse kann mit einer lösbaren Abdeckung abgedeckt sein, wobei auf der dem Schacht zugewandten Seite der Abdeckung ein Steuernocken angeordnet ist, der mit der Führungskulisse am Entriegelungshebel zusammenwirkt. Eine derartige Anordnung erleichtert unter anderem auch die Montage. Die Abdeckung kann dabei in seitliche Führungsnuten an den Schachtseitenwänden einschiebbar und mit einem lösbaren Schnappverschluss verriegelbar sein.

Auch die Gabel kann am Boden des Führungsschachtes in seitlichen Führungsnuten an den Schachtseitenwänden einschiebbar oder aber nur einlegbar sein und am Gabelansatz an einem Haltenocken verriegelbar sein. Auf diese Weise können die Gabeln leicht ausgetauscht werden, bzw. es kann das gleiche Einschubgehäuse mit Gabeln unterschiedlicher Federkraft bestückt werden.

Vorzugsweise weist das Einschubgehäuse mehrere parallel nebeneinander liegende Führungsschächte auf, wobei die beiden äussersten Schachtseitenwände mit je einem Einführarm zum Zentrieren der Steckerteile auf die korrespondierenden Buchsenteile versehen sind. Diese Einführarme sorgen dafür, dass die Steckerteile in der richtigen Relativlage an die Buchsenteile angenähert werden.

Die Einschub-Steckerverbindung ist vorteilhaft mit einem Buchsenteil versehen, dessen Buchsenöffnung mit einer schwenkbaren Schutzklappe verschlossen ist, die beim Einschieben des Steckerteils aufschwenkt. Dabei bleibt die im Buchsenteil gelagerte eigentliche Buchse vor Verschmutzung geschützt. Ausserdem wird verhindert, dass beispielsweise Laserlicht von einem in das Buchsenteil eingesteckten Gegenstecker austreten kann.

Auch das Steckergehäuse kann stirnseitig mit einem schwenkbaren Schutzdeckel verschlossen sein, der beim Einschieben des Steckerteils in das Buchsenteil aufschwenkt. Einzelstekker dieser Art sind bereits bekannt.

Schliesslich kann die Schutzklappe am Buchsenteil eine federnde Sperrklinke bilden, welche in der Einrastposition hinter einer Sperrleiste am Steckergehäuse einrastet. Die Schutzklappe erfüllt damit eine Doppelfunktion, indem sie einerseits das Buchsenteil verschliesst und andererseits ein eingestecktes Steckerteil in der Einrastposition festhält.

Weitere Einzelmerkmale und Vorteile der Erfindung ergeben sich aus der nachstehenden Beschreibung eines Ausführungsbeispiels und aus den Zeichnungen. Es zeigen:
- Fig. 1: Ein Querschnitt durch eine erfindungsgemässe Einschub-Steckverbindung,
- Fig. 2: eine Draufsicht auf ein Einschubgehäuse mit insgesamt sechs Führungsschächten,
- Fig. 3: ein Querschnitt durch die Ebene B-B am Einschubgehäuse gemäss Figur 2,
- Fig. 4: eine Ansicht aus Pfeilrichtung A auf das Einschubgehäuse gemäss Figur 3,
- Fig. 5: eine Draufsicht auf eine Gabel,
- Fig. 6: eine Seitenansicht einer Abdeckung,
- Fig. 7: eine Draufsicht auf einen Schlitten,
- Fig. 8: ein Querschnitt durch die Ebene C-C am Schlitten gemäss Figur 7,
- Fig. 9: eine Ansicht von unten auf den Schlitten gemäss Figur 7,
- Fig. 10: eine perspektivische Ansicht auf die Unterseite des Schlittens gemäss Figur 7 mit darüberliegender Gabel,
- Fig. 11: eine perspektivische Darstellung eines Steckerteils und eines Schlittens vor dem Zusammenbau,
- Fig. 12: das Steckerteil und der Schlitten gemäss Figur 11 im zusammengebauten Zustand,
- Fig. 13: bis 20 verschiedene Sequenzen beim Herstellen und Lösen der Einschub-Steckverbindung, und
- Fig. 21: eine perspektivische Darstellung auf das Einschubgehäuse gemäss Figur 2 mit abgenommenen Abdeckungen.

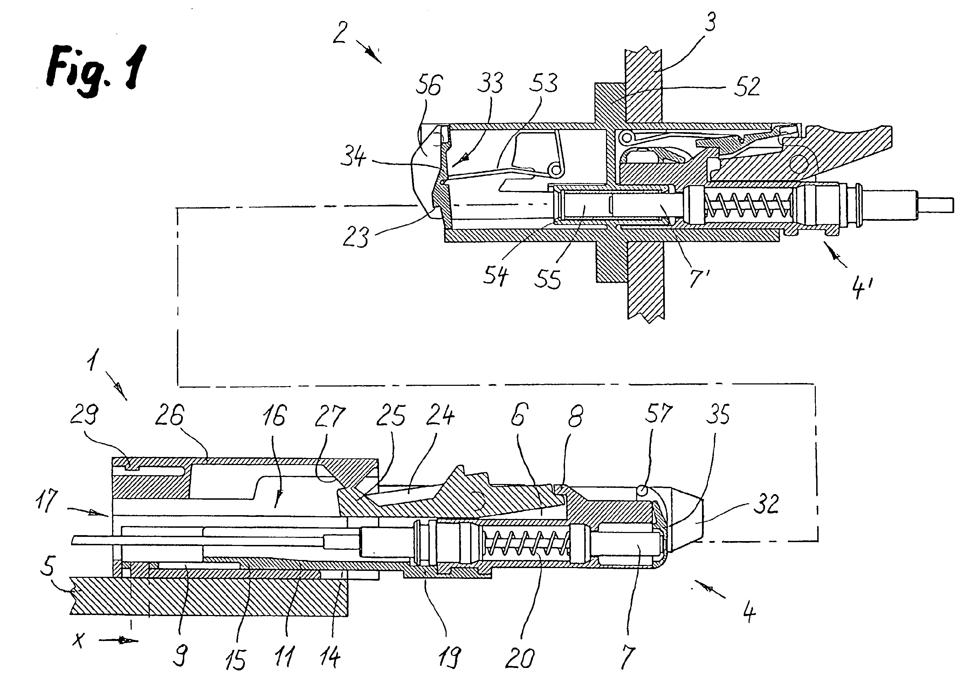

Anhand von Figur 1 werden zunächst die wesentlichen Bauteile der Steckeranordnung 1 und des Buchsenteils 2 erläutert. Demnach besteht die Steckeranordnung 1 aus einem Einschubgehäuse 16, das fest auf einer Tochterplatine 5 montiert ist und in welchem mehrere Steckerteile 4 axial verschiebbar gelagert sind. Die einzelnen Steckerteile 4 sind auf einem Schlitten 19 fixiert, der im Einschubgehäuse geführt ist. Jedem Schlitten ist ein eigener Führungsschacht 17 zugeordnet, der gegen oben mit einer Abdeckung 26 abgedeckt ist.

Das Steckerteil 4 verfügt über ein Steckergehäuse 6, in welchem an einer Druckfeder 20 axial federnd ein Steckerstift 7 gelagert ist. Die Stirnseite des Steckerghäuses ist zum Schutz des Steckerstifts mit einem Schutzdeckel 35 verschlossen, der erst beim Einsteckvorgang aufgeschwenkt und zurückgeschoben wird. Zur Fixierung des Steckergehäuses 6 im Buchsenteil 2 ist eine Sperrleiste 8 angeordnet, die von einer Sperrklinke 23 am Buchsenteil hinterfasst werden kann. Zum Lösen der Verriegelung ist am Steckergehäuse 6 ein Entriegelungshebel 24 schwenkbar gelagert, dessen einer Hebelarm bis unmittelbar an die Sperrleiste 8 reicht. Der andere Hebelarm ist an seinem freien Ende mit einer Führungskulisse 25 versehen, die auf nachstehend noch beschriebene Art und Weise mit einem Steuernocken 27 an der Abdeckung 26 zusammenwirkt.

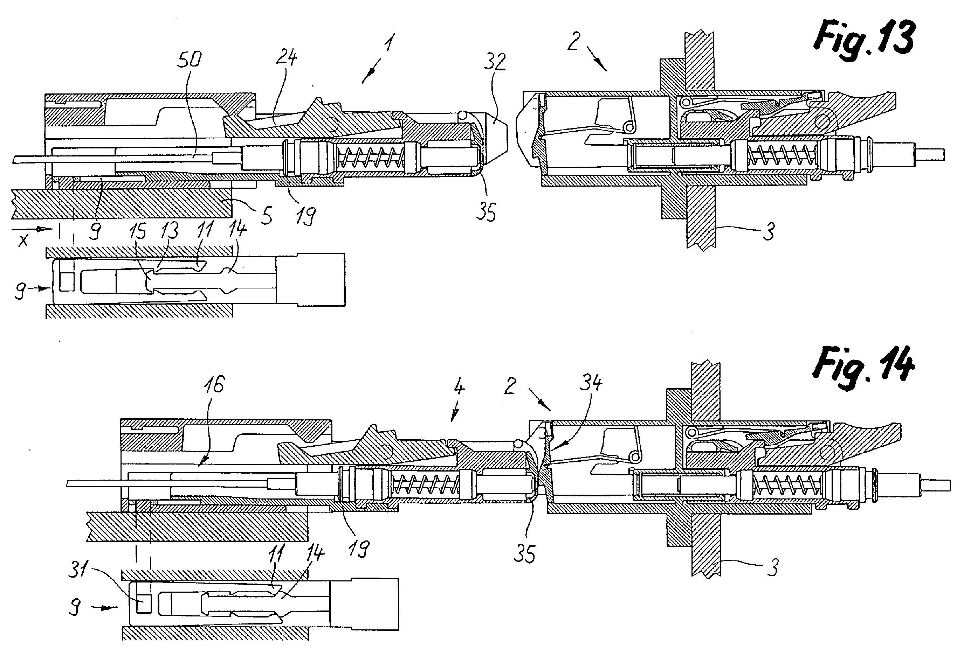

Am Boden jedes Führungsschachtes 17 ist eine U-förmige Gabel 9 mit federnden Schenkeln fixiert. Diese Gabel wirkt mit einem Schubanschlag 14 und mit einem Zuganschlag 15 auf der Unterseite des Schlittens 19 (Fig. 13) zusammen.

Das Buchsenteil 2 ist als Durchführungskupplung ausgebildet und mit einem Flansch 52 an einer Mutterplatine 3 befestigt, bei der es sich beispielsweise auch um eine Gehäuserückwand handeln kann. In jedes Buchsenteil kann von beiden Seiten her je ein optischer Stecker 4, 4' eingesteckt werden, wobei deren Steckerstifte 7, 7' in einer exakt bearbeiteten Buchse 55 aufeinander zentriert und gegeneinander gepresst werden. Die Buchse 55 ist in einem Buchsenlager 54 gehalten. Die einschubseitige Buchsenöffnung 33 ist mit einer schwenkbaren Schutzklappe 34 verschlossen, wobei sie mittels einer Feder 53 in Schliessstellung gehalten wird. Auf der Aussenseite der Schutzklappe ist die Sperrklinke 23 zum Arretieren des Stekkerteils in der Einrastposition angeordnet. Ein Paar seitliche Führungskulissen 56 wirken beim Einsteckvorgang mit seitlichen Steuernocken 57 am Schutzdeckel 35 zusammen und bewirken ein Aufschwenken des Schutzdeckels. Das Buchsenteil 2 ist nicht speziell für die erfindungsgemässe Steckeranordnung ausgebildet, sondern kann auch für konventionelle Einzelstecker verwendet werden. Genauere Einzelheiten über die Funktion des Buchsenteils und über dessen Zusammenwirken mit dem Steckerteil können der europäischen Patentanmeldung 97810513.8 entnommen werden.

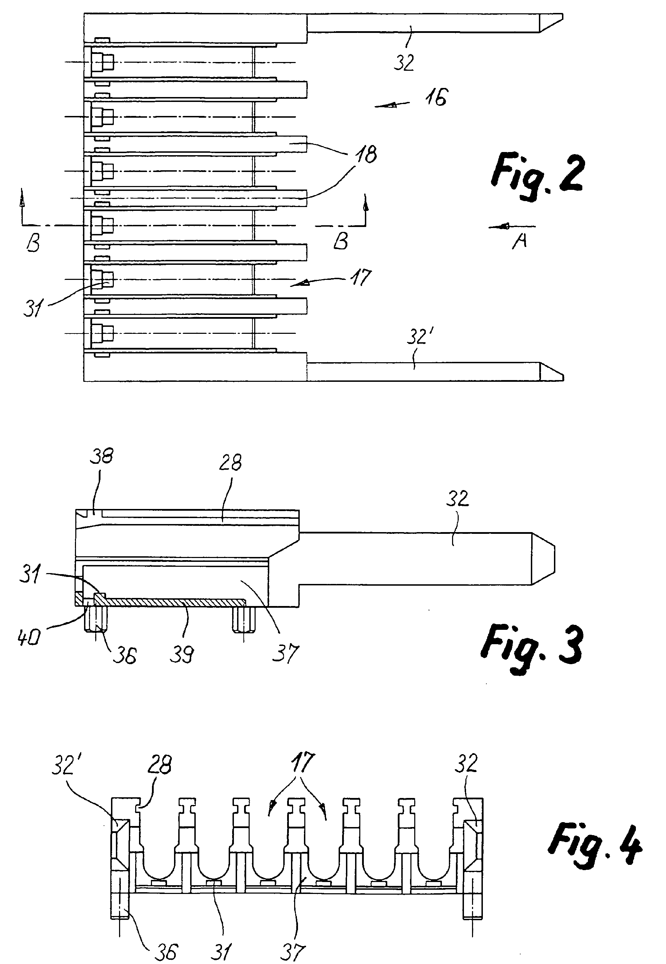

Aus den Figuren 2 bis 6 sind Einzelheiten über das Einschubgehäuse 16 und über die Befestigung der Gabel 9 in den einzelnen Führungsschächten ersichtlich. Wie in Figur 2 dargestellt, sind die einzelnen Führungsschächte 17 durch Seitenwände 18 begrenzt. Die jeweils äussersten Seitenwände gehen einstückig in je einen Einführarm 32, 32' über. Am Boden 39 des Einschubgehäuses 16 sind Befestigungsbolzen 36 angeordnet, die der Befestigung auf der Tochterplatine dienen.

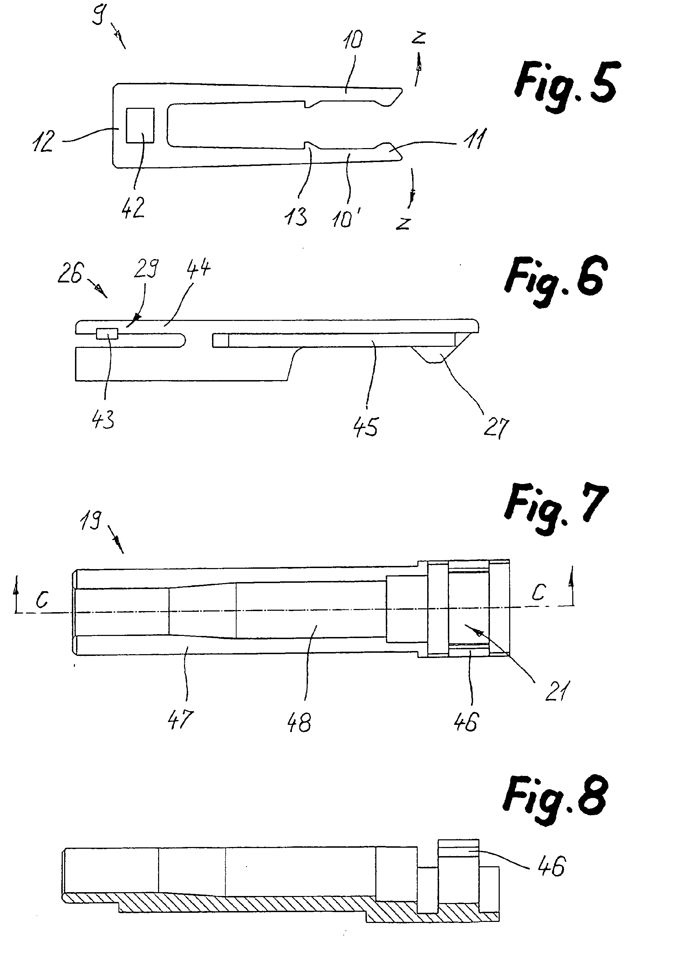

Jeder einzelne Führungsschacht 17 kann mit einer Abdeckung 26 (Figur 6) verschlossen werden. Zu diesem Zweck sind seitliche Führungsnuten 28 an den Schachtseitenwänden 18 vorgesehen. Seitliche Führungsleisten 45 an der Abdeckung 26 greifen in die Führungsnuten 28. Die Fixierung jeder Abdeckung erfolgt mittels einem Schnappverschluss 29. Dieser besteht aus einem Federhebel 44, der an seinem Endabschnitt eine seitlich überstehende Leiste 43 aufweist. Die Leiste schnappt in seitliche Ausspannungen 38 an den Schachtseitenwänden 18. Zum Lösen der Verriegelung muss der Federhebel 44 etwas niedergedrückt werden, so dass die Leiste 43 wieder ausrastet. Auf der Unterseite jeder Abdeckung 26 ist ein Steuernocken 27 angeordnet.

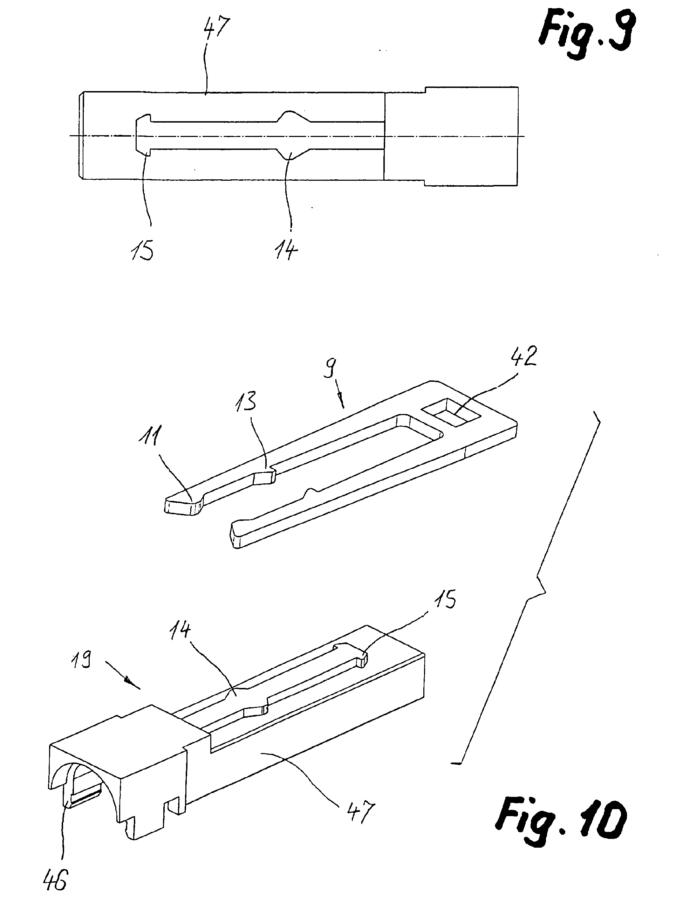

Die Konfiguration einer Gabel 9 ist aus den Figuren 5 und 10 ersichtlich. Sie ist einstückig aus einem flachen Materialabschnitt aus Federstahl oder aus Kunststoff ausgebildet und verfügt über die beiden Gabelschenkel 10, 10', die an einem Gabelansatz 12 miteinander verbunden sind. Am Gabelansatz ist eine rechteckige Oeffnung 42 angeordnet, an welcher die Gabel im Einschubgehäuse fixiert werden kann. Am äussersten Ende jedes Gabelschenkels ist auf der Innenseite je ein Schubnokken 11 angeordnet. Etwas weiter gegen den Gabelansatz 12 hin ist ebenfalls auf der Innenseite je ein Sperrklinkenzahn 13 angeordnet. Die Schubnocken 11 sind auf beiden Seiten angeschrägt, während die Sperrklinkenzähne 13 nur in Einschubrichtung eine Anschrägung aufweisen. Die beiden Gabelschenkel 10, 10' können in Pfeilrichtung z gegen ihre Federkraft aufgespreizt werden.

Die Befestigung der Gabeln in den einzelnen Führungsschächten erfolgt durch Einlegen unmittelbar am Boden jedes Schachtes. Am hinteren Ende jedes Schachtes ist ein Haltenocken 31 angeordnet, der in die Oeffnung 42 einer Gabel eingreift. Unmittelbar hinter dem Haltenocken ist eine durchgehende Oeffnung 40 im Boden 39 vorgesehen, so dass mit einem geeigneten Werkzeug durch die Oeffnung 40 hindurch der Gabelansatz 12 wieder aus dem Haltenocken 31 gehoben werden kann.

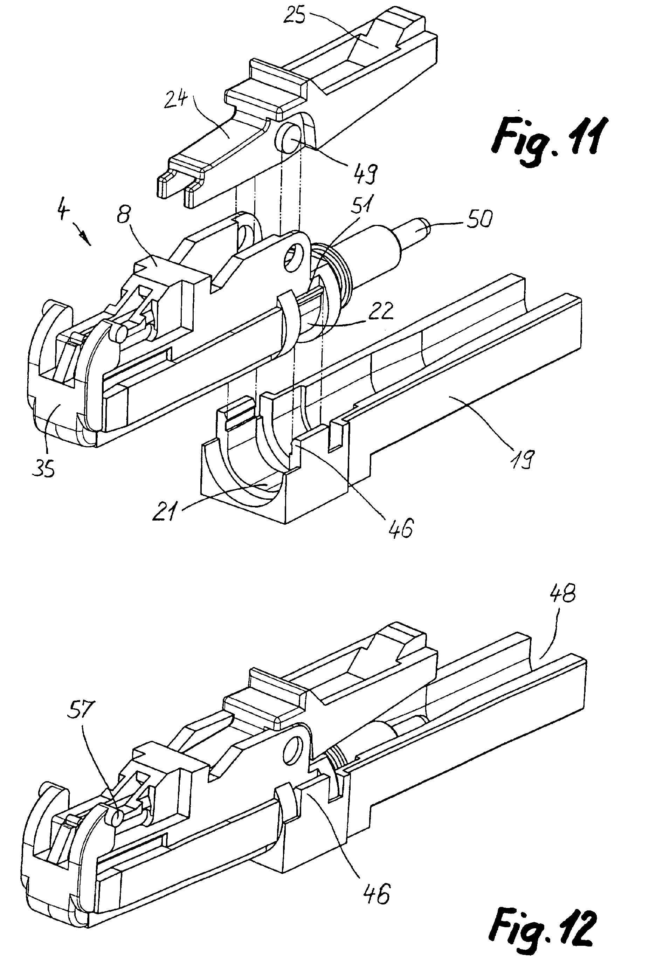

Einzelheiten des Schlittens 19 sind aus den Figuren 7 bis 10 ersichtlich. Jeder Schlitten 19 ist halbschalenartig ausgebildet und mit seitlichen Schlittenkufen 47 versehen. An diesen Schlittenkufen ist jeder Schlitten in seitlichen Schlittenführungen 37 am Einschubgehäuse 16 geführt. Der Schlitten verfügt über eine Lagerpfanne 21 zur Aufnahme des Steckerteils und über eine Kabelaufnahme 48, in welcher das Lichtwellenleiterkabel 50 (Figur 11) aufgenommen werden kann. Im Bereich der Lagerpfanne 21 sind auf der Aussenseite Halteklauen 46 angeordnet, welche in Leisten 51 am Steckergehäuse eingreifen. Auf der Unterseite ist jeder Schlitten mit einem Schubanschlag 14 und mit einem Zuganschlag 15 versehen, deren Konfiguration aus Figur 9 und 10 ersichtlich ist. Die maximale Wandstärke dieser Anschläge ist so dimensioniert, dass sie zwischen die Gabelschenkel 10, 10' greifen können. Der Schubanschlag 14 hat eine Aussenkonfiguration, welche ein Ueberfahren der beiden Schubnocken 11 nach Ueberwinden einer bestimmten Federkraft in beide Richtungen erlaubt. Die maximale Breite eines Schubanschlags 14 ist dabei ersichtlicherweise grösser als die lichte Weite zwischen zwei sich gegenüber liegenden Schubnocken 11. Die Konfiguration der Zuganschläge 15 ist dagegen so ausgebildet, dass ein Ueberfahren der Sperrklinkenzähne 13 nur in einer Richtung bei der erstmaligen Montage möglich ist. Die maximale Breite der Zuganschläge 15 ist ebenfalls grösser als die lichte Weite zwischen zwei sich benachbarten Sperrklinkenzähnen 13, doch ist nach dem erstmaligen Einführen ein Zurückziehen ohne Aufspreizen der Gabelschenkel 10, 10' nicht mehr möglich.

Weitere Einzelheiten der Befestigung des Steckerteils 4 auf einem Schlitten 19 ergeben sich aus den Figuren 11 und 12. Jedes Steckergehäuse ist mit einem Lagerabschnitt 22 versehen, welcher formschlüssig in die Lagerpfanne 21 eines Schlittens passt. Die seitlichen Halteklauen 46 umfassen das Steckergehäuse U-förmig und rasten in die Leisten 51 ein, wobei sie auf diese Weise das Steckergehäuse lösbar mit dem Schlitten verbinden. Das Steckerteil 4 kann dabei aber auch als ganz konventioneller Stecker eingesetzt werden.

Aus den Figuren 11 und 12 sind auch noch die seitlichen Lagerzapfen 49 zum schwenkbaren Lagern des Entriegelungshebels 24, sowie die seitlichen Steuernocken 57 zum Aufschwenken und Zurückziehen des Schutzdeckels 35 ersichtlich.

Die Vorgänge beim Einschieben und Zurückziehen der erfindungsgemässen Steckeranordnung werden anschliessend anhand der Figuren 13 bis 20 näher erläutert. Die Figuren zeigen jeweils Querschnitte durch die Steckeranordnung und durch das Buchsenteil, wobei zum besseren Verständnis bei jeder Stekkeranordnung noch die Relativlage der Gabel als Unteransicht auf Gabel und Schlitten dargestellt ist.

Gemäss Figur 13 wird die Steckeranordnung 1 in Einschubrichtung x auf die Mutterplatine 3 zu bewegt, auf welcher eine der Anzahl Steckerteile entsprechende Anzahl Buchsenteile 2 befestigt sind. Die Einführarme 32 haben ihre Führungsöffnungen an der Mutterplatine noch nicht erreicht. Die Schlitten 19 sind vollständig ausgefahren und der Entriegelungshebel 24 ist noch in Lösestellung niedergedrückt.

Bei der in Figur 14 dargestellten Sequenz liegt der Schutzdeckel 35 auf der Schutzklappe 34 am Buchsenteil 2 auf. Durch den dabei entstehenden Widerstand wird der Schlitten 19 so weit in das Einschubgehäuse 16 eingeschoben, bis der Schubanschlag 14 an den Schubnocken 11 der Gabel 9 anliegt. Jede weitere Einschubbewegung in Pfeilrichtung x erfolgt jetzt gegen die Federkraft der Gabel 9. Diese Federkraft reicht jedoch aus, um die Reibungswiderstände beim Eindringen des Steckerteils 4 in das Buchsenteil 2 zu überwinden.

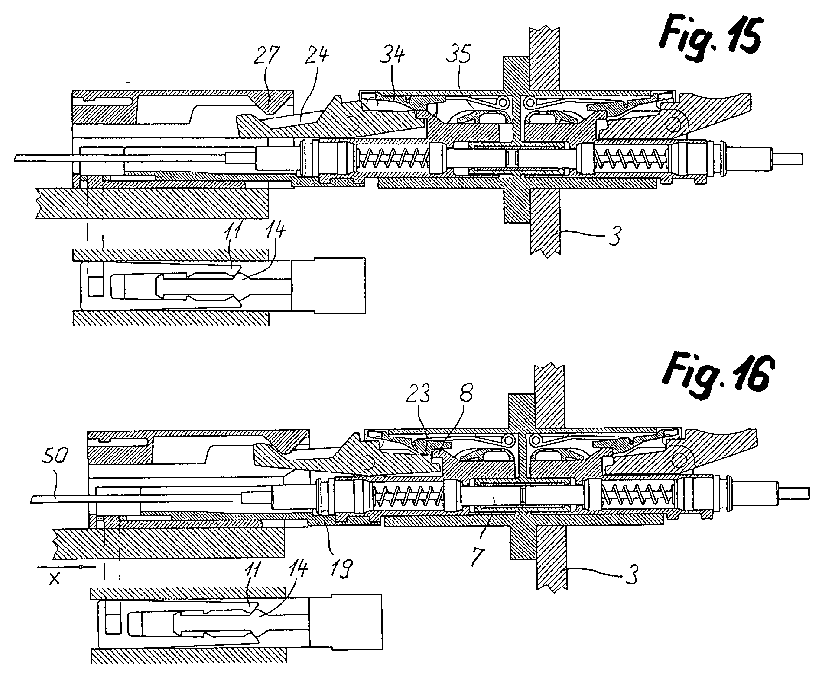

Die nächste Sequenz gemäss Figur 15 zeigt die Position des Steckerteils 4 kurz vor dem Erreichen der Einrastposition. Die Schutzklappe 34 ist ganz nach innen aufgeschwenkt und der Schutzdeckel 35 ist um 90° hochgeschwenkt und zurückgezogen. Der Entriegelungshebel 24 ist befreit und wird durch den Steuernocken 27 nicht mehr in Lösestellung fixiert. Die Schubnocken 11 liegen unverändert am Schubanschlag 14 an.

Figur 16 zeigt das Erreichen der Einrastposition. Die Sperrklinke 23 ist jetzt hinter die Sperrleiste 8 eingerastet, so dass der Steckerstift 7 gegen seine axiale Vorspannung in der Buchse 55 gehalten und stirnseitig gegen den Steckerstift 7' gepresst wird. Durch Zug am Kabel 50 kann die Steckverbindung nicht mehr gelöst werden. Auch jetzt liegen die Schubnocken 11 der Gabel 9 noch am Schubanschlag 14 an. Da der Schlitten 19 nicht mehr weiter gegen die Mutterplatine 3 bewegt werden kann, führt jede weitere Schubbewegung in Pfeilrichtung x zu einem Aufspreizen der Gabelschenkel.

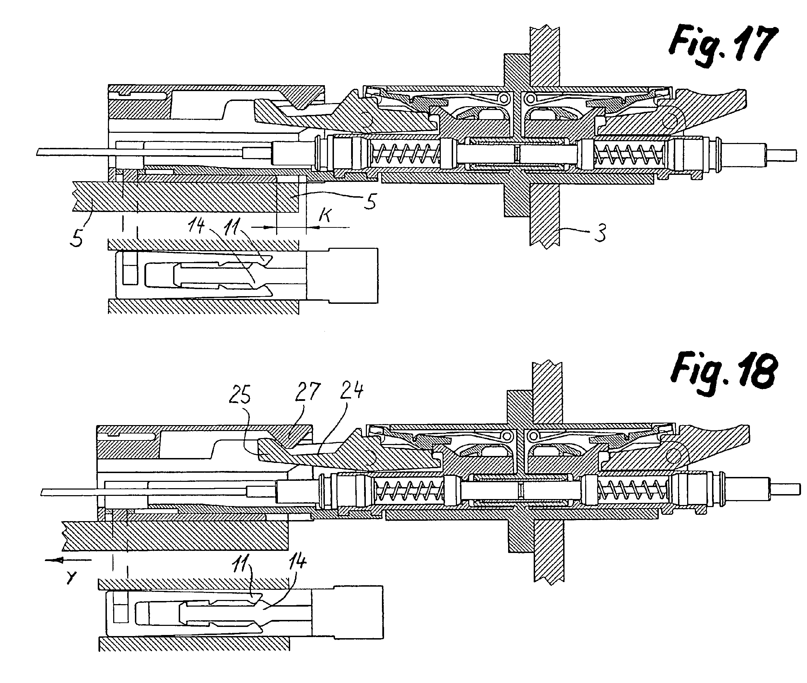

In der Position gemäss Figur 17 haben die Schubnocken 11 den Schubanschlag 14 durch Aufspreizen überfahren. Die Tochterplatine 5 ist jetzt kraftmässig von der Mutterplatine 3 entkoppelt und kann um eine bestimmte Strecke weiter gegen die Mutterplatine hin bewegt werden. Die maximal mögliche axiale Kompensation K ermöglicht es, Masstoleranzen auszugleichen und die Tochterplatine spannungsfrei im Gehäuse zu montieren.

Beim Zurückziehen der Steckeranordnung 1 in Pfeilrichtung y wird gemäss Figur 18 zunächst wiederum der Schubanschlag 14 in umgekehrter Richtung durch die beiden Schubnocken 11 überfahren. Während dieser Rückzugsbewegung bleibt das Stekkerteil aber noch unverändert im Buchsenteil in der verriegelten Stellung eingesteckt, bis der Steuernocken 27 an der Führungskulisse 25 des Entriegelungshebels 24 anliegt.

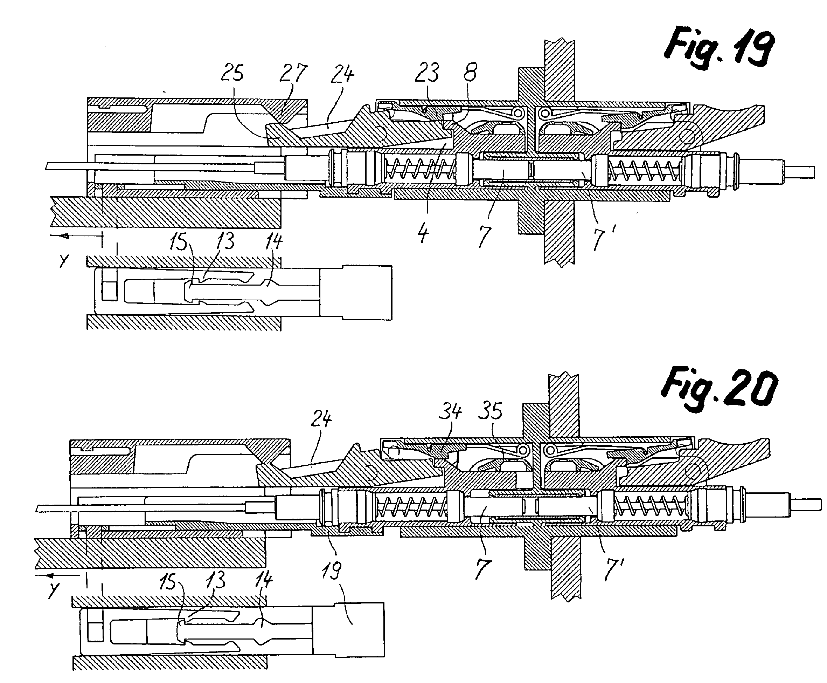

Die weitere Rückzugsbewegung bewirkt gemäss Figur 19 zunächst ein Niederdrücken des Entriegelungshebels 24, wobei die Sperrklinke 23 hinter der Sperrleiste 8 herausgehoben wird. Erst jetzt ist ein Herausziehen des Steckerteils 4 aus dem Buchsenteil 2 überhaupt möglich.

Wenn der Entriegelungshebel 24 seine endgültige Lösestellung erreicht hat, liegen auch die Sperrklinkenzähne 13 am Zuganschlag 15 an. Der Schlitten 19 hat jetzt seine maximale Ausfahrposition erreicht und die Zugkraft wird über den Zuganschlag 15 direkt auf den Schlitten übertragen. Beim jetzt einsetzenden Ausziehen des Steckerteils aus dem Buchsenteil schliesst sich die Schutzklappe 34 selbständig und auch der Schutzdeckel 35 wird durch hier nicht näher dargestellte Mittel wieder in seine Schliessposition gepresst.

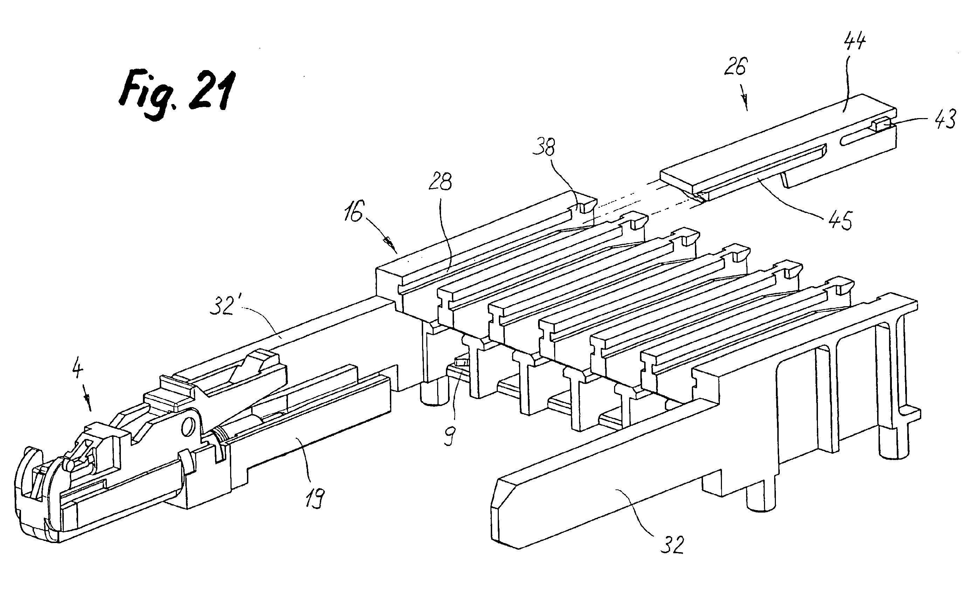

Figur 21 zeigt nochmals eine perspektivische Darstellung eines Einschubgehäuses 16, bei dem alle Abdeckungen 26 entfernt sind. Im hintersten Führungsschacht ist gerade noch das Schenkelende einer Gabel 9 sichtbar. Dort wird der Schlitten 19 mit dem Steckerteil 4 eingeführt, wodurch die Gabel 9 unverlierbar am Boden des Führungsschachts festgehalten wird. Anschliessend wird der Führungsschacht mit einer Abdeckung 26 verschlossen. Selbstverständlich ist es nicht zwingend erforderlich, dass in jedem Führungsschacht eines Einschubgehäuses ein Schlitten mit einem Steckerteil gelagert wird. Je nach Anwendungsfall kann ein Einschubgehäuse ausserdem mehr oder weniger Führungsschächte aufweisen.

## Patentansprüche

1. Steckeranordnung (1) für eine optische Einschub-Steckverbindung zwischen wenigstens einem Buchsenteil (2) auf einer relativ ortfesten Mutterplatine (3) und wenigstens einem Steckerteil (4) auf einer bezogen auf die Mutterplatine relativ mobilen Tochterplatine (5), mit einem auf der Tochterplatine gehaltenen Steckergehäuse (6), mit einem im Steckergehäuse unter axialer Federvorspannung gelagerten Steckerstift (7), sowie mit Rastmitteln (8) zum Einrasten des Steckergehäuses im Buchsenteil in einer Einrastposition, wobei die Tochterplatine nach Erreichen der Einrastposition vom Steckerstift, bzw. von der Mutterplatine zum Kompensieren von Masstoleranzen mechanisch entkoppelbar ist, **dadurch gekennzeichnet, dass** das Steckergehäuse (6) in Einschubrichtung direkt oder indirekt an einem federnden Schubelement (9) gegen die Tochterplatine (5) abgestützt ist, dessen Federkraft die Abstützung bis zum Erreichen der Einrastposition aufrecht erhält und anschliessend bei fortgesetzter Schubbewegung die Abstützung selbständig löst, wobei das Schubelement eine der Tochterplatine (5) zugeordnete U-förmige Gabel (9) ist, deren Schenkel (10, 10') zum Lösen der Abstützung aufspreizbar und/oder zusammenpressbar sind und wobei an den Schenkeln Schubnocken (11) angeordnet sind, welche zum Aufspreizen und/oder Zusammenpressen der Schenkel (10, 10') mit einem dem Steckerteil (4) zugeordneten Schubanschlag (14) zusammenwirken.

2. Steckeranordnung nach Anspruch 1, **dadurch gekennzeichnet, dass** auf der Innenseite der in Einsteckrichtung gerichteten Gabelschenkeln (10, 10') je ein Schubnocken angeordnet ist.

3. Steckeranordnung nach Anspruch 2, **dadurch gekennzeichnet, dass** zwischen dem Gabelansatz (12) und den Schubnocken (11) an jedem Gabelschenkel (10, 10') je ein Sperrklinkenzahn (13) angeordnet ist, der zum Rückzug der Tochterplatine (5) mit einem Zuganschlag (15) zusammenwirkt.

4. Steckeranordnung nach einem der Ansprüche 1 bis 3, **dadurch gekennzeichnet, dass** die Gabel (9) am Gabelansatz (12) in einem Einschubgehäuse (16) gehalten ist, das wenigstens einen Führungsschacht (17) für das Steckerteil (4) bildet.

5. Steckeranordnung nach Anspruch 4, **dadurch gekennzeichnet, dass** das Steckerteil (4) mit einem Schlitten (19) axial verschiebbar im Führungsschacht (17) gelagert ist und dass der Schubanschlag (14) am Schlitten angeordnet ist.

6. Steckeranordnung nach Anspruch 5, **dadurch gekennzeichnet, dass** das Steckerteil (4) lösbar mit dem Schlitten (19) verbunden ist.

7. Steckeranordnung nach Anspruch 6, **dadurch gekennzeichnet, dass** das Steckergehäuse (6) einen Abschnitt (22) aufweist, der formschlüssig in eine Lagerpfanne (21) am Schlitten (19) passt und dass der Schlitten Halteklauen (46) aufweist, welche das Steckergehäuse in der Lagerpfanne fixieren.

8. Steckeranordnung nach einem der Ansprüche 4 bis 7, **dadurch gekennzeichnet, dass** das Rastmittel eine am Steckergehäuse (6) angeordnete Sperrleiste (8) ist, welche in der Einrastposition mit einer federnden Sperrklinke (23) am Buchsenteil (2) zusammenwirkt und dass am Steckergehäuse ein Entriegelungshebel (24) schwenkbar gelagert ist, mit dem die Sperrklinke lösbar ist, wobei der Entriegelungshebel eine Führungskulisse (25) aufweist, welche derart mit dem Einschubgehäuse (16) zusammenwirkt, dass bei ganz ausgefahrenem Steckerteil der Entriegelungshebel in Lösestellung gepresst wird.

9. Steckeranordnung nach Anspruch 8, **dadurch gekennzeichnet, dass** der Führungsschacht (17) mit einer lösbaren Abdeckung (26) abgedeckt ist und dass auf der dem Schacht zugewandten Seite der Abdeckung ein Steuernocken (27) angeordnet ist, der mit der Führungskulisse (25) am Entriegelungshebel zusammenwirkt.

10. Steckeranordnung nach Anspruch 9, **dadurch gekennzeichnet, dass** die Abdeckung (26) in seitliche Führungsnuten (28) an den Schachtseitenwänden (18) einschiebbar und mit einem lösbaren Schnappverschluss (29) verriegelbar ist.

11. Steckeranordnung nach einem der Ansprüche 4 bis 10, **dadurch gekennzeichnet, dass** die Gabel (9) am Boden (39) des Führungsschachtes (17) einlegbar und am Gabelansatz (12) an einem Haltenocken (31) verriegelbar ist.

12. Steckeranordnung nach einem der Ansprüche 4 bis 11, **dadurch gekennzeichnet, dass** das Einschubgehäuse (16) mehrere parallel nebeneinander liegende Führungsschächte (17) aufweist und dass die beiden äussersten Schachtseitenwände mit je einem Einführarm (32, 32') zum Zentrieren der Steckerteile auf die korrespondierenden Buchsenteile versehen sind.

13. Einschub-Steckverbindung mit einer Steckeranordnung (1) nach einem der Ansprüche 1 bis 12, **gekennzeichnet durch** ein Buchsenteil (2), dessen Buchsenöffnung (33) mit einer schwenkbaren Schutzklappe (34) verschlossen ist, die beim Einschieben des Steckerteils (4) aufschwenkt.

14. Einschub-Steckverbindung nach Anspruch 13, **dadurch gekennzeichnet, dass** das Steckergehäuse (6) stirnseitig mit einem schwenkbaren Schutzdeckel (35) verschlossen ist, der beim Einschieben des Steckerteils (4) in das Buchsenteil (2) aufschwenkt.

15. Einschub-Steckerbindung nach Anspruch 13 oder 14, **dadurch gekennzeichnet, dass** die Schutzklappe (34) eine federnde Sperrklinke bildet, welche in der Einrastposition hinter einer Sperrleiste (8) am Steckergehäuse einrastet.

## Claims

1. Plug arrangement (1) for an optical withdrawable plug-type connection between at least one socket part (2) on a relatively stationary motherboard (3) and at least one plug part (4) on a daughterboard (5), which is mobile in relation to the motherboard, with a plug housing (6) held on the daughterboard, with a plug pin (7) mounted in the plug housing under axial spring prestress, and with latching means (8) for latching the plug housing in the socket part in a latch-in position, the daughterboard being capable of being mechanically decoupled from the plug pin, or from the motherboard, in order to compensate for dimensional tolerances once the latch-in position has been reached, **characterized in that** the plug housing (6) is supported in the insertion direction directly or indirectly on a sprung push element (9) against the daughterboard (5), the spring force of said push element maintaining the support up until the latch-in position is reached and then automatically releasing the support as the pushing movement continues, the push element being a U-shaped fork (9), which is associated with the daughterboard (5) and whose limbs (10, 10') can be spread apart and/or pressed together in order to release the support, and push cams (11) being arranged on the limbs, which push cams interact with a push stop (14), which is associated with the plug part (4), in order to spread apart and/or press together the limbs (10, 10').

2. Plug arrangement according to Claim 1, **characterized in that** in each case one push cam is arranged on the inside of the fork limbs (10, 10'), which are directed in the plug-in direction.

3. Plug arrangement according to Claim 2, **characterized in that** in each case one ratchet tooth (13), which interacts with a pull stop (15) in order to pull back the daughterboard (5), is arranged between the fork shoulder (12) and the push cams (11) on each fork limb (10, 10').

4. Plug arrangement according to one of Claims 1 to 3, **characterized in that** the fork (9) is held on the fork shoulder (12) in a withdrawable housing (16), which forms at least one guide shaft (17) to the plug part (4).

5. Plug arrangement according to Claim 4, **characterized in that** the plug part (4) is mounted with a carriage (19) axially displaceably in the guide shaft (17), and **in that** the push stop (14) is arranged on the carriage.

6. Plug arrangement according to Claim 5, **characterized in that** the plug part (4) is connected releasably to the carriage (19).

7. Plug arrangement according to Claim 6, **characterized in that** the plug housing (6) has a section (22) which fits in a form-fitting manner into a bearing block (21) on the carriage (19), and **in that** the carriage has holding claws (46), which fix the plug housing in the bearing block.

8. Plug arrangement according to one of Claims 4 to 7, **characterized in that** the latching means is an inhibiting strip (8), which is arranged on the plug housing (6) and interacts in the latch-in position with a sprung detent pawl (23) on the socket part (2), and **in that** an unlocking lever (24) is mounted pivotably on the plug housing and can be used to release the detent pawl, the unlocking lever having a slotted guide (25), which interacts with the withdrawable housing (16) in such a way that, when the plug part is completely withdrawn, the unlocking lever is pressed into the release position.

9. Plug arrangement according to Claim 8, **characterized in that** the guide shaft (17) is covered by a releasable cover (26), and **in that** a radial cam (27) is arranged on that side of the cover which faces the shaft, which radial cam interacts with the slotted guide (25) on the unlocking lever.

10. Plug arrangement according to Claim 9, **characterized in that** the cover (26) can be pushed into lateral guide grooves (28) on the shaft side walls (18) and can be locked with a releasable snap-action closure (29).

11. Plug arrangement according to one of Claims 4 to 10, **characterized in that** the fork (9) can be inserted on the base (39) of the guide shaft (17) and can be locked on the fork shoulder (12) using a holding cam (31).

12. Plug arrangement according to one of Claims 4 to 11, **characterized in that** the withdrawable housing (16) has a plurality of guide shafts (17) which are positioned parallel next to one another, and **in that** the two outermost shaft side walls are each provided with an insertion arm (32, 32') for centring the plug parts on the corresponding socket parts.

13. Withdrawable plug-type connection with a plug arrangement (1) according to one of Claims 1 to 12, **characterized by** a socket part (2), whose socket opening (33) is closed by a pivotable protective flap (34), which pivots up when the plug part (4) is inserted.

14. Withdrawable plug-type connection according to Claim 13, **characterized in that** the plug housing (6) is closed at one end by a pivotable protective cover (35), which pivots up when the plug part (4) is inserted into the socket part (2).

15. Withdrawable plug-type connection according to Claim 13 or 14, **characterized in that** the protective flap (34) forms a sprung detent pawl, which latches in behind an inhibiting strip (8) on the plug housing in the latch-in position.

## Revendications

1. Dispositif de connecteur (1) pour une connexion optique à tiroir entre au moins une partie femelle (2) sur une platine mère relativement fixe (3) et au moins une partie mâle (4) sur une platine fille (5) relativement mobile par rapport à la platine mère, avec un boîtier de connecteur (6) maintenu sur la platine fille, avec une broche de connecteur (7) montée dans le boîtier de connecteur avec précontrainte axiale de ressort, et avec des moyens d'encliquetage (8) pour l'encliquetage du boîtier de connecteur dans la partie femelle dans une position d'encliquetage, la platine fille pouvant être désaccouplée mécaniquement de la broche de connecteur, ou de la platine mère, après avoir atteint la position d'encliquetage, pour compenser les tolérances de masse, **caractérisé en ce que** le boîtier de connecteur (6) est supporté dans la direction d'enfoncement directement ou indirectement sur un élément de poussée à ressort (9) contre la platine fille (5), dont la force de ressort maintient le support jusqu'à ce que la position d'encliquetage soit atteinte et qui ensuite libère automatiquement le support en cas de mouvement de poussée poursuivi, l'élément de poussée étant une fourche (9) en forme de U associée à la platine fille (5), dont les branches (10, 10') peuvent être écartées et/ou comprimées pour libérer le support, et des cames de poussée (11) étant disposées sur les branches, lesquelles coopèrent avec une butée de poussée (14) associée à la partie mâle (4) pour écarter et/ou comprimer les branches (10, 10').

2. Dispositif de connecteur selon la revendication 1, **caractérisé en ce que** l'on dispose sur le côté intérieur des branches de la fourche (10, 10') orientées dans la direction d'enfichage, une came de poussée respective.

3. Dispositif de connecteur selon la revendication 2, **caractérisé en ce qu'**entre l'élément de fourche (12) et les cames de poussée (11), est disposée une dent de cliquet d'arrêt respective (13) sur chaque branche de fourche (10, 10'), qui coopère avec une butée de traction (15) pour le retrait de la platine fille (5).

4. Dispositif de connecteur selon l'une quelconque des revendications 1 à 3, **caractérisé en ce que** la fourche (9) est maintenue sur l'élément de fourche (12) dans un boîtier d'insertion (16), qui forme au moins une gaine de guidage (17) pour la partie mâle (4).

5. Dispositif de connecteur selon la revendication 4, **caractérisé en ce que** la partie mâle (4) est montée avec un chariot (19) de manière déplaçable axialement dans la gaine de guidage (17) et **en ce que** la butée de poussée (14) est disposée sur le chariot.

6. Dispositif de connecteur selon la revendication 5, **caractérisé en ce que** la partie mâle (4) est connectée de manière amovible au chariot (19).

7. Dispositif de connecteur selon la revendication 6, **caractérisé en ce que** le boîtier de connecteur (6) présente une portion (22) qui s'adapte par engagement par correspondance géométrique dans une cavité d'appui (21) sur le chariot (19) et **en ce que** le chariot présente des griffes de retenue (46) qui fixent le boîtier de connecteur dans la cavité d'appui.

8. Dispositif de connecteur selon l'une quelconque des revendications 4 à 7, **caractérisé en ce que** le moyen d'encliquetage est un profil d'arrêt (8) disposé sur le boîtier de connecteur (6) qui coopère dans la position d'encliquetage avec un cliquet d'arrêt (23) élastique sur la partie femelle (2) et **en ce qu'**un levier de déverrouillage (24) est monté de manière pivotante sur le boîtier de connecteur, lequel permet de libérer le cliquet d'arrêt, le levier de déverrouillage présentant une coulisse de guidage (25) qui coopère avec le boîtier d'insertion (16) de telle sorte que le levier de déverrouillage soit pressé dans la position de libération lorsque la partie mâle est complètement sortie.

9. Dispositif de connecteur selon la revendication 8, **caractérisé en ce que** la gaine de guidage (17) est recouverte d'un recouvrement amovible (26) et **en ce qu'**une came de commande (27) est disposée du côté du recouvrement tourné vers la gaine, laquelle came coopère avec la coulisse de guidage (25) sur le levier de déverrouillage.

10. Dispositif de connecteur selon la revendication 9, **caractérisé en ce que** le recouvrement (26) peut être enfoncé dans des rainures de guidage (28) sur les parois latérales de la gaine (18) et peut être verrouillé avec une fermeture par encliquetage (29) amovible.

11. Dispositif de connecteur selon l'une quelconque des revendications 4 à 10, **caractérisé en ce que** la fourche (9) peut être logée au fond (39) de la gaine de guidage (17) et peut être verrouillé sur l'élément de fourche (12) à une came de retenue (31).

12. Dispositif de connecteur selon l'une quelconque des revendications 4 à 11, **caractérisé en ce que** le boîtier d'insertion (16) présente plusieurs gaines de guidage (17) parallèles et juxtaposées, et **en ce que** les deux parois latérale extérieures de la gaine sont pourvues d'un bras d'insertion respectif (32, 32') pour le centrage des parties mâles sur les parties femelles correspondantes.

13. Connexion à tiroir comprenant un dispositif de connecteur (1) selon l'une quelconque des revendications 1 à 12, **caractérisée par** une partie femelle (2), dont l'ouverture femelle (33) est fermée par un volet de protection pivotant (34), qui s'ouvre par pivotement lors de l'insertion de la partie mâle (4).

14. Connexion à tiroir selon la revendication 13, **caractérisée en ce que** le boîtier de connecteur (6) est fermé du côté frontal par un couvercle de protection pivotant (35), qui s'ouvre par pivotement lors de l'insertion de la partie mâle (4) dans la partie femelle (2).

15. Connexion à tiroir selon la revendication 13 ou 14, **caractérisée en ce que** le volet de protection (34) forme un cliquet d'arrêt élastique qui s'encliquète dans la position d'encliquetage derrière un profil d'arrêt (8) sur le boîtier de connecteur.
